# EUROPEAN PATENT SPECIFICATION

(11) **EP 4 216 732 B1**
(45) Date of publication and mention of the grant of the patent: **22.01.2025**
(21) Application number: 21777560.0
(22) Date of filing: 22.09.2021
(51) Int. Cl.: A23L 11/50

(54) **A PROCESS FOR PREPARING A PROTEIN CONTAINING FERMENTED PLANT BASED PRODUCT**
VERFAHREN ZUR HERSTELLUNG EINES PROTEINS MIT FERMENTIERTEM PFLANZENBASIERTEM PRODUKT
PROCÉDÉ DE PRÉPARATION D'UN PRODUIT À BASE DE PLANTES FERMENTÉES CONTENANT DES PROTÉINES

(30) Priority: 25.09.2020 EP 20198524
(43) Date of publication of application: 02.08.2023
(73) Proprietor: Société des Produits Nestlé S.A., 1800 Vevey (CH)
(72) Inventor: DENG, Yuxi, 3014 Bern (CH); LIANG, Youyun, Singapore 618802 (SG); WIDMER, Christoph Thomas, 3122 Kehrsatz (CH); BIEHL, Jan, 3600 Thun (CH); ANANTA, Edwin, 1066 Epalinges (CH)
(74) Representative: Elleby, Gudrun
(86) International application number: PCT/EP2021/076069
(87) International publication number: WO 2022/063833

(56) References cited:
- WO-A1-2009/065724
- WO-A1-2014/123466
- WO-A1-2017/171601
- WO-A1-2019/122499

## Description

### Field of the invention

The present invention relates to a process for preparing a plant protein containing fermented plant based product obtained from a defatted oleaginous plant, as well as the fermented plant based product obtainable according to this process, and protein-rich food products comprising such a plant protein containing fermented plant based product.

### Background

It is well known that plant-based products can be used as ingredients for protein sources in view to prepare food products, in particular beverages, such as ready to drink beverages. The plant based products are from a sustainability point of view interesting. Usually, these plant based products are prepared according to advanced processes that provide high purity products such as plant protein isolates and plant protein concentrates. Because of the need to carry out advanced processes to prepare these high purity products, their cost is high and, consequently, make the cost of food products containing them, such as ready to drink beverages, higher than dairy-based food products obtained with skimmed milk powder.

However, except for some uses, such as meat analogues or infant products, other food products and beverages, which use plant proteins as a source of bulk nutrition and/or techno-functional ingredients, do not require the protein purity to be at an isolate or a concentrate level.

The food industry leads to the formation of residual raw products, which are rich in proteins, and which often have no valuable outlet or even are simply disposed.

This is the case of defatted oleaginous plants, which are by-products resulting from the preparation of food grade oils. Oleaginous plants are plants which are cultivated and exploited for their parts which have high fat contents, such as their seeds or their fruits. Typically, oleaginous plants can contain up to 50% fat.

The treatment of the oleaginous plants, or parts thereof, to obtain oil, is generally carried out according to three main operations, which are:
- preparing the raw material from which oil is to be extracted (in particular seeds or fruits of the oleaginous plant); during this operation, the raw material can be subjected to one or more of the following steps: cleaning, dedusting, sieving, shelling or hulling.
- crushing: this operation can comprise several steps depending on the raw material to be crushed; this operation may comprise a step of grinding and extracting, at least partially, the oil contained in the raw material.
- refining the oil, which consists of removing all or part of the compounds contained in the extracted oil, which make it unsuitable for use or subsequent conversion.

In addition to the crushing operation, it is possible to recover further oil from the plant by chemical extraction, with a solvent, such as water or an organic solvent.

The defatted oleaginous plants resulting from this treatment are, depending of the type of treatment, under the form of, for example, a press cake, a flour, or a meal.

These by-products are rich in protein.

Therefore, it is of interest to recover the proteins contained in such press cakes, flours or meals, to replace the costly plant protein isolates and concentrates in food products. Even though these affordable raw products have the advantage of being cost competitive, their protein solubility are often lower than the protein isolates/concentrates.

Since the proteins are often used as emulsifying or foaming agents, the protein solubility should not be lower than the required level.

Moreover, the insoluble proteins could increase the risk of being sandy and/or precipitating upon storage.

In order to increase the solubility of the protein, it is known to modify the solvent properties of the solution or modify the structure of the protein, in particular, by reducing its size.

However, these techniques, if they can improve the protein solubility in a certain extent, often leads to precipitation of the protein or a modification of their taste.

For example, enzymatic hydrolysis generates certain level of bitterness due to the formation of a number of bitter peptides formed along the reaction process.

Another way to theoretically increase protein solubility is to chemically or enzymatically modify their structure.

For food application, this can be achieved by the Maillard glycation or by enzymatic deamidation.

The Maillard glycation is quite difficult to control at the industrial scale, since once the Maillard reaction went too far, there might be unwanted colour and/or odour formation. WO 2014/123466 discloses a process for preparing a liquid oat-base or drink of improved soluble oat protein content from an oat material, wherein the oat proteins are solubilised in an aqueous solvent by means of a protein deamidase, such as a protein glutaminase.

Protein glutaminase is a deamidation enzyme that enables to convert the glutamine residue in the substrate protein into glutamic acid / glutamate (depending on the pH of the solution).

Other authors have reported that protein glutaminase enable to increase the solubility of soybean proteins (Suppavorasatit I. et al., (2011), Journal of Agricultural and Food Chemistry, 59, 11621-11628), coconut proteins (Kunarayakul S., et al. (2018), Food Hydrocolloids, 79, 197-207), as well as the solubility of wheat gluten (Yong Y.H. et al. (2006), Journal of Agricultural and Food Chemistry, 54, 6034-6040).

In those cases, the substrates were protein isolates/concentrates but not the defatted plants.

Gharst et al., Journal of Food Science, vol. 72, N. 7, 2007, p. 369-375 describes that peanut flour dispersion proceeds to gelation at a temperature of 68°C, whereas when the dispersion is treated with transglutaminase, the gelation occurs to a higher temperature of 78°C. WO 2019/122 499 A1 discloses a process for preparing plant-based food products. WO 2009/065 724 A1 discloses a process for preparing a beverage by providing pasteurized aqueous liquid of dissolved soy protein and dairy protein. WO 2017/171 601 A1 discloses a process for producing a non-dairy food product of enhanced viscosity.

It has been found by testing protein glutaminase on defatted oleaginous plant suspensions in an aqueous solvent, in particular on a peanut press cake suspension. They noted that a great part of the proteins contained in the defatted oleaginous plant solubilized in the aqueous solvent.

However, when the solution of proteins so obtained was heated before the fermentation process, in some cases, the protein formed large particles, providing inacceptable sandiness. These particles are usually made of or comprise coagulated proteins. It was also noted that heat treatment may render the protein solution too viscous. Now, it is usually necessary to heat the obtained protein solution in order to inactivate the enzymes (for example at 80°C) and/or to proceed to its pasteurisation or sterilisation (for example at 120°C).

### Object of the invention

It is an object of the invention to provide a process enabling to efficiently prepare the proteins contained in defatted oleaginous plants and, at the same time, enabling the plant based product containing these proteins, when heated, even at the elevated temperatures carried out for pasteurisation or sterilisation, not to lead to the formation of large particles, while maintaining an acceptable viscosity.

It is also an object of the invention to provide a yoghurt analogue, which make use of defatted oleaginous plants.

### Summary of the invention

The present invention provides the improvement on mouthfeel, physical stability and viscosity of a plant protein containing fermented products from a defatted oleaginous plant by enzymatic reactions.

In a first aspect, the invention relates a process for preparing a protein containing fermented plant based product from a defatted oleaginous plant, characterized in that it comprises the following steps:
a) Forming a suspension comprising the defatted oleaginous plant in an aqueous solvent;
b) Enzymatically treating the suspension obtained in step a), with the following enzymes:
   - at least one protein glutaminase for the solubilisation in said aqueous solvent of proteins contained in the defatted oleaginous plant,
   - optionally one transglutaminase,
   - at least one glycosidase,
   said enzymes being used successively or simultaneously;
c) Homogenizing at a pressure higher than 30 bar to obtain a protein containing plant based product
d) Optionally recovering the protein containing plant based product obtained in step c);
e) Heating the plant based product to a temperature from 80°C to 140°C for 2 seconds to 10 min; and
f) Inoculating the plant based product with at least one starter culture to obtain an inoculated the plant based product and fermenting the plant based product until reaching a pH from 3.0 to 5.5, preferably 4.5 to 5.0 to obtain a protein containing fermented plant based product.

It has been found that the invention provides a process enabling to efficiently preparation of fermented plant based products containing defatted oleaginous plants. At the same time the products according to the process of the invention contain proteins from defatted oleaginous plants which when heated before the fermentation step, even at the elevated temperatures carried out for pasteurisation or sterilisation, do not lead to the formation of large particles, while maintaining an acceptable viscosity. In addition, this invention provides a solution for the fermented plant based products to have no sandiness perception.

In a second aspect, the invention relates to a plant protein containing fermented plant based product according to the process described herein. The invention also relates to a plant protein containing fermented plant based product comprising from 1 to 6 % protein, from 1 to 6 % fat and from 0.5 to 10% carbohydrate (weight %), and a protein-rich food product, characterized in that it comprises the plant protein containing the protein containing plant based product and at least one food acceptable additive. In particular, a protein-rich food product that is a ready-to-drink beverage a spoonable or drinkable yoghurt, or a kefir analogue.

### Brief Description of the Drawings

Figure 1 shows a diagram of an embodiment of the process according to the invention.
Figure 2 is a diagram of the effects of the homogenization on the solubility of the PG treated peanut protein at pH 7,0.
Figure 3 shows a diagram of the solubility of peanut protein at pH 7,0 after enzymatic treatment with (i) PG with α-amylase and (ii) PG with α-amylase and transglutaminase (TG).
Figure 4 is a diagram showing PSD measured on three peanut protein solutions obtained from peanut flour suspensions treated with PG alone; with PG and heat treatment (110°C for 5 minutes); and with PG, TG and heat treatment (110°C for 5 minutes).
Figure 5 is a diagram showing the effects of the enzymatic treatment with PG, α-amylase and TG on the viscosity of peanut protein solutions.
Figure 6 is a picture showing a final ambient yoghurt analogue liquid according to the invention.

### Detailed description of the invention

The oleaginous plants, which can be used in the process of the invention are preferably selected from the group consisting of peanut, soybean, rapeseed, sunflower, sesame, neem, cotton, palm, coconut, shea, castor bean, corn, nuts, almonds, hazelnuts, coconut, pistachios, walnut, cashew, seeds of grapes or a combination thereof.

The term "oleaginous plant" includes the part(s) of the plant which are used for recovering oil such as, in particular, the fruits or the seeds of the plant.

Among these oleaginous plants, one prefers to use soya bean, and still more preferably peanuts, and more precisely peanut seeds.

The term "defatted" means that the oil has been totally or partially removed from the oleaginous plant.

Oleaginous plants usually contain at least 15% by weight oil, preferably at least 20% by weight oil, more preferably from 30% to 60 % by weight oil (weight % with respect to the total weight of the oleaginous plant).

A defatted oleaginous plant according to the invention is usually defatted so as to contain less than 25%, generally from 0.3 to 20 %, more generally from 0.5 to 15 %, still more generally from 1 to 10% of non-extracted oil (weight % with respect to the total weight of the defatted oleaginous plant).

The defatted oleaginous plants usually contain at least 20% % by weight proteins, preferably from 25 to 60 % proteins, more preferably from 35% to 60% proteins (weight % with respect to the total weight of the defatted oleaginous plant).

Preferably, the oleaginous plant is crushed before step a) in order to extract its oil.

The defatted oleaginous plant preferably is the form of a press cake, a flour or a meal. The defatted oleaginous plant is expected to contain between 20 to 80% proteins, preferably between 40 to 55% proteins.

According to a preferred embodiment of the present invention, the defatted oleaginous plant is a soya bean flour or press cake, peanut flour or, more preferably, a peanut press cake.

Besides, the possible residual fat, the defatted oleaginous plant also contains proteins and carbohydrates such as fibres.

According to the process of the invention, the defatted oleaginous plant is suspended in an aqueous solvent to form a suspension containing from 1 to 30 %, preferably from 5 to 20 %, and more preferably from 10 to 20 % of the defatted oleaginous plant with respect to the total weight of the suspension (w/w %).

The aqueous solvent is preferably water.

Generally, the suspension is mixed at high speed, preferably at a speed comprised above 5000 rpm, and more preferably from 10.000 to 20.000 rpm. The high speed mixing is generally carried out for a period of 5 to 30 minutes, preferably from 10 to 25 minutes.

The mixed suspension can be heated at a temperature comprised between 30 to 70 °C, preferably from 40 to 60 °C.

The pH of the suspension can be adjusted at a value comprised between 5 and 8, preferably between 6.5 and 7.5, more preferably at a pH of 7.

Protein glutaminases are a family of enzymes (EC 3.5.1.44) which enables to convert the glutamine residues present in the substrate protein into glutamic acid or glutamate, with the formation of ammonium ions (depending on the pH of the solution).

Protein glutaminases which can be used in the process of the invention are those commercialised by Amano Inc. (Japan), such as the protein glutaminase PG 500.

Usually, the defatted oleaginous plant/protein glutaminase weight ratio is comprised between 50:1 to 2000:1, preferably between 250:1 to 1500:1 and more preferably from 500:1 to 1200:1.

It has been found that the use of low ratio of protein glutaminase with respect to the defatted oleaginous plant, for example a ratio of 500:1, enables to provide the same efficacy with respect to the solubilisation of the plant protein contained in the defatted oleaginous plant than higher ratios, for example a ratio of 100:1.

This has an important impact at the industrial scale because protein glutaminases are relatively costly and it is therefore important to diminish as importantly as possible the amounts of these enzymes.

Transglutaminases are a family of enzymes (EC 2.3.2.13) that catalyses the generation of covalent linkages between the glutamine and lysine amino acid residues present in the protein molecules. When linkages are formed, ammonia is released.

Among the transglutaminases, which can be used in the process of the present invention, one may mention the transglutaminase TG-BV commercialised by Juangsu Yiming (China).

The defatted oleaginous plant/transglutaminase weight ratio is usually comprised between 500:1 to 2000:1, preferably between 800:1 to 1500:1.

According to a preferred embodiment of the present invention, the enzymatic treatment according to step b) is carried out by means of using a third type of enzyme, namely glycosidases.

Glycosidases, or glycoside hydrolases, are enzymes which catalyse the hydrolysis of glycosidic bonds in sugar.

Glycosidases are classified into EC 3.2.1. Among the glycosidases which can be used in the process of the invention, one preferably uses alpha amylase, beta amylase, cellulose, beta-glucanase, or mixtures thereof, in particular the mixture of cellulase with beta-glucanase.

It has been found that the enzymatic treatment of the defatted oleaginous plant may provide a certain gelatinization of the aqueous suspension. This phenomenon has been found to be starch gelatinization or other complex sugars gelatinization.

Preferably enzymatic treatment of step b) is carried out in the presence of at least one glycosidase, preferably an α-amylase, a cellulase, a β-glucanase or a mixture of a cellulase with a β-glucanase.

In the case of peanuts, this mainly results from the presence of starch. In the case of soya bean, this results from the presence of fibres.

Therefore, when the oleaginous plant is peanut seeds, under the form of a peanuts press cake, the glycosidase is preferably alpha amylase.

When the oleaginous plant is soya bean, the glycosidase is preferably a cellulase, a beta-glucanase or a mixture of a cellulase with a beta-glucanase.

The defatted oleaginous plant/glycosidase ratio is usually comprised between 200:1 to 2000:1, preferably between 700:1 to 1500:1, and more preferably between 800:1 to 1200:1.

Step b) of the process according to the invention can be carried out by using the protein glutaminase and the transglutaminase in the suspension, successively or, preferably, simultaneously.

When they are used successively, the enzymatic treatment can be made in a first step with a protein glutaminase followed by the treatment with a transglutaminase or, conversely, the transglutaminase can be used first followed by the protein glutaminase.

When a glycosidase is carried out, it can be as well used with the other enzymes successively or, preferably, simultaneously.

In a preferred embodiment of the invention the starter culture comprises at least one lactic acid-producing bacteria or the starter culture comprises least one lactic acid-producing bacteria and at least one yeast.

After the first heat-treatment step, the process comprises a step of inoculating the heat-treated and homogenized plant-based food composition with at least one starter culture. Especially, the starter culture is substantially free, preferably entirely free from dairy components or soy components. Examples of starter culture include Lactobacillus acidophilus, Lactobacillus delbrueckii subsp. bulgaricus, Lactobacillus paracasei, Lactobacillus casei, Lactobacillus johnsonii, Lactobacillus plantarum, Streptococcus thermophilus, Streptococcus lactis, Streptococcus cremoris, Bacillus coagulans, strains from the genus Bifidobacterium and mixtures thereof. Preferably, the starter culture consists of one or more lactic acid bacteria strains. Preferably, the starter culture consists of one or more thermophilic lactic acid bacteria strains. The term "thermophilic lactic acid bacteria strains" refers to lactic acid bacteria strains having an optimal growth at a temperature between 36°C and 45°C. Most preferably, the starter culture is a combination of Lactobacillus delbrueckii subsp. bulgaricus and Streptococcus thermophilus. Especially, Lactobacillus delbrueckii subsp. bulgaricus and Streptococcus thermophilus are the two staple strains that are used in dairy yogurts. According to certain regulation, the yogurt denomination is only possible for dairy yogurt containing said two strains as starter cultures. Hence, by using these strains, the yogurt analogue even more mimics dairy yogurts.

In the embodiment where the starter culture comprises least one lactic acid-producing bacteria and at least one yeast it is preferred that the yeast the at least one yeast, preferably selected from the group consisting of: Zygosaccharomyces, Candida, Kloeckera/Hanseniaspora, Torulaspora, Pichia, Brettanomyces/Dekkera, Saccharomyces, Lachancea, Saccharomycoides, Schizosaccharomyces, and Kluyveromyces, most preferably Saccharomyces and Kluyveromyces, and/or at least one acetic acid-producing bacteria, preferably selected from the group consisting of Acetobacter and Gluconacetobacter.

After the inoculation step, the process according to the invention comprises a step of fermenting inoculated plant-based food composition until reaching a pH from 3.0 to 5.5, preferably 4.5 to 5.0, to obtain a fermented plant based product e.g. a plant-based yogurt analogue. During the fermentation step, the starter culture converts the fermentable sugar into acids. The formation of acids promotes the formation of a gel with a sufficient consistency by the coagulation of plant proteins into a plant protein network. The consistency of the obtained gel mimics the consistency of standard dairy yogurts. A satisfactory texture is obtained even in the absence of added thickening agents.

The enzymatic treatment is generally carried out within more than 1/2 hour, preferably within 1 to 6 hours, and more preferably within 2 hours

After the enzymatic treatment, the enzymes are inactivated, usually by heat treatment, for example at a temperature comprised between 70 to 90°C, for a period of time of 5 to 15 minutes. Alternatively, the first heat treatment of the process according to the invention can be used for inactivating the enzymes.

The fermented plant based product obtained after the enzymatic treatment usually contains from 2 to 6% proteins, preferably from 2.5 to 6 % proteins. It also contains from 0.5 to 10 %, preferably from 5 to 8 % carbohydrates and from 1 to 6 %, preferably 1 to 3% fat.

According to a preferred embodiment, after the enzymatic treatment of step b), the plant based product containing the protein solubilised from the oleaginous plant, is submitted to a homogenisation step. This homogenisation step consists in submitting said plant based product to high pressure. Before the homogenization step other ingredients may be added to the product such as sugar, flavors, and fat.

Usually, the pressure carried out for the homogenisation step is higher than 30 bar, preferably comprised between 100 and 400 bar, more preferably between 130 and 300 bar.

Preferably an additional homogenization may be carried out at a pressure, between 100 and 400 bar, more preferably between 130 and 300 bar, after the fermentation of the product.

The homogenisation step can be carried out at a temperature comprised between 30 and 80°C, preferably between 40 and 60°C.

The homogenisation step usually lasts from 10 min to 2 hours, preferable from 30 to 90 min.

The homogenisation step can be performed in one or several stages, usually two stages. When it is performed in two stages, the first stage can be performed at a first pressure comprised between 100 to 350 bar, preferably between 150 and 300 bar, and the second stage can be performed at a second pressure of 30 to 90 bar, preferably between 35 and 70 bar.

The temperature at which each stage is carried out can be the same or different.

Similarly, the duration of each of the stages can be equal or different.

The homogenisation step can be carried out using conventional homogenisation devices, in particular a GEA Panda Plus 2000 homogeniser. The conditions of use of the GEA Panda Plus 2000 homogeniser are settled by the manufacturer's recommendations.
After the enzymatic treatment step and a possible homogenisation step, the plant based product obtained can be submitted to a heating step in view to pasteurize or sterilize it. Heating the plant based product to a temperature from 80°C to 140°C for 2 seconds to 10 min; and
minutes.

After the fermentation of the product an additional heating is carried out at a temperature from 80°C to 140°C for 2 seconds to 10 minutes to obtain a shelf-stable fermented plant based product.

After this heating step, the fermented plant based product is cooled down to room temperature.

The fermented plant based product generally contains from 2 to 6% proteins, preferably from 2.5 to 6 % proteins. It also contains from 0.5 to 10 %, preferably from 5 to 8 % carbohydrates and from 1 to 6 %, preferably 1 to 3% fat.

This plant based product was subjected to fermentation process with bacterial culture.

The amount of used bacterial culture can be 0.01 % to 0.02 %.

Preferably, the process according to the invention comprises a step of smoothing the fermented plant-based product following the fermentation step.

The smoothing step may be performed with a rotor stator smoothing device as described in EP1986501 A1. Moreover, the smoothing step may be performed with a Ytron smoothing device at 30Hz. The smoothing step enables to smooth and homogenize the gel obtained after fermentation into a homogenous fluid having no or limited grainy texture. Especially, the smoothing device shall minimize the loss of viscosity that is subsequent to smoothing step. Hence, a fluid with a satisfactory texture, especially viscosity and mouthfeel, is obtained. Moreover, the smoothing step enables to ensure a good incorporation of pectin and maximize its thickening and protective properties.

According to a third aspect of the invention, there is provided a protein-rich food product that contains the plant protein containing a fermented plant based product obtainable according to the above process, and usually, at least one food acceptable additive. The plant protein containing fermented plant based product obtained according to the process of the invention can be used as such as a food product containing protein, but usually it comprises at least one food acceptable additive.

Food products according to the invention include analogues to dairy products, in particular drinkable yoghurt like beverages.

The food product may comprise, in addition to the plant protein containing fermented plant based product obtained according to the invention, a fat product, such as cocoa butter or an oil, such as soybean oil, rapeseed oil, olive oil, sun flower oil, or a mixture thereof. The fat product concentration can be comprised between 0.2 to 10 %, preferably between 1 to 6 %, more preferably between 2 to 4 % (% by weight with respect to the total weight of the food product).

The food product can also comprise one or more additives selected among the followings:
- sweeteners such as sugar-based sweeteners like sucrose, invert syrup, fructose syrup, glucose syrup, maltodextrins ; sugarless sweeteners in particular sugar alcohols such as maltitol, xylitol, sorbitol, erythritol, mannitol, isomalt and lactitol, hydrogenated starch hydrolysates, saccharin, cyclamate, acetosulfane, an L-aspartyl-based sweetener ; combinations thereof.
- flavours and/or colorants;
- one or more vitamins and/or minerals, in particular vitamins A, B, C, D, E, K, ascorbic acid, ascorbyl palmitate, pantothenic acid, folic acid and biotin or a combination thereof; calcium, magnesium, iron, zinc, iodine, copper, phosphorus, manganese, potassium, chromium, molybdenum, selenium, nickel, tin, silicon, vanadium and boron or a combination thereof. The source of calcium can include calcium carbonate, calcium phosphate, calcium citrate, other insoluble calcium compounds. The sources of magnesium can include magnesium phosphate, magnesium carbonate, magnesium hydroxide. The sources of iron include iron ammonium phosphate, ferric pyrophosphate, ferric phosphate, ferrous phosphate, other insoluble iron compounds, amino acids, iron chelating compounds such as EDTA.
- prebiotics ; a "prebiotic" is to be understood as a non-digestible food ingredient that promotes the growth of beneficial microorganisms in the intestines. Non-limiting examples of prebiotics include fructooligosaccharides, inulin, lactulose, galactooligosaccharides, soyoligosaccharides, xylooligosaccharides, isomaltooligosaccharides, gentiooligosaccharides, lactosucrose, glucooligosaccharides, pectioligosaccharides, resistant starches, sugar alcohols or a combination thereof.
- one or more stabilizer system. A "stabilizer system" is to be understood as an ingredient or a mixture of ingredients which contributes to the physical stability of the food product with respect to shelf life.
- one or more thickeners, gelling agents and emulsifiers such a gums like locust bean gum, xanthan gum, starch, pectin, microcrystalline cellulose, carboxymethyl cellulose and carrageenan are non-limiting examples of stabilizer systems that can be used according to the invention alone or in combination thereof.
- one or more preservatives and/or antioxidants, such as acetic acid, ascorbic acid, calcium ascorbate, arythorbic acid, iso-ascorbic acid, potassium nitrate, potassium nitrite, sodium ascorbate, sodium nitrate, sodium nitrite, ethyl lauroyl arginate, propionic acid, sodium sorbate, sorbic acid, dimethyl dicarbonate and butylated hydroxyanisole.
- additional proteins from animal or vegetal origin

A protein-rich food product according to the invention usually contains from 1 to 10%, preferably from 2 to 6 % and more preferably from 2 to 4 % weight proteins from an oleaginous plant (% by weight with respect to the total weight of the food product).

The protein-rich product is subjected to the incubation with a bacteria culture with an addition of 0.01 % to 0.02 %, at 35-45 °C, preferably from 42 to 44 °C. The fermentation is stopped at a pH of 4.5-5.0, preferably from 4.5-4.8.

Optionally, the fermented product is subjected to another UHT heat treatment.

In another embodiment of the invention, no additional UHT heat treatment is applied.

Any reference to prior art documents in this specification is not to be considered an admission that such prior art is widely known or forms part of the common general knowledge in the field.

As used in this specification, the words "comprises", "comprising", and similar words, are not to be interpreted in an exclusive or exhaustive sense. In other words, they are intended to mean "including", but not limited to.

The invention is further described with reference to the following examples. It will be appreciated that the invention as claimed is not intended to be limited in any way by these examples.

### Material and methods

The material and methods used to perform the following examples are described thereafter.

Peanut press cake: provided by Wilmar (China); contained about 52,5% (N-factor 6,25) proteins, 5,7% moisture, 1,0% fat and 31,4% carbohydrates.

Enzymes: protein glutaminase (PG500) from AMANO enzymes (Japan) at a ratio flour to PG of 100-500:1 (w/w); α-amylase (BAN 480 L) from Novoenzyme (Denmark) at a ratio flour to amylase of 1000:1; transglutaminase (TG-BV) from Jiangsu Yiming (China) at a ratio flour to TG of 1250:1. These enzymes were used as supplied.

Solubility: measured at pH 7,0 based on Kjeldahl method using a Büchi B-339 equipment according to the manufacturer's recommendations. N-factor 6.25 is used to calculate the protein content. The reason is to obtain a better comparison of results with specification from suppliers.

Particle size distribution (PSD) analysis: the liquid PSD analysis was performed using Malvern's laser diffraction equipment (Malvern Mastersize 2000). According to this quantitative method, the PSD D [V,0.9] (or D90 in volume) has been determined.

Differential Scanning calorimetry (DSC): the denaturation temperature of peanut protein was measured with DSC.

Moisture analysis: measured according to Karl Fischer's method.

Viscosity analysis: measured using a Thermo Haake RS6000 coupled with UMTC thermocontroler settled according to the manufacturer's recommendation with a flow curve of 0-300 s-1 in 180 seconds at 25°C. The data are collected every two seconds.

### Examples

### Example 1: Enzymatic treatment process of the peanut press cake.

A peanut press cake is suspended in water in order to obtain three suspensions comprising respectively 10, 15 or 20% w/w total solids (TS). The suspensions are pre-mixed at 14 000 RPM for 15 minutes. The pH is then adjusted to 7,0 and the suspensions are heated at 50°C. The proteins in the suspensions are then digested using a mixture of enzymes for up to 2 hours. The mixture contains α-amylase, protein glutaminase (PG), transglutaminase (TG) or a combination thereof.

After the enzymatic treatment, the enzymes are inactivated by raising the heating temperature to 80°C for 10 minutes. The suspensions are then diluted to 5% TS and homogenized under a pressure of 300 bar.

Afterwards, the suspensions are treated at heat temperature at 92°C for 6 minutes.

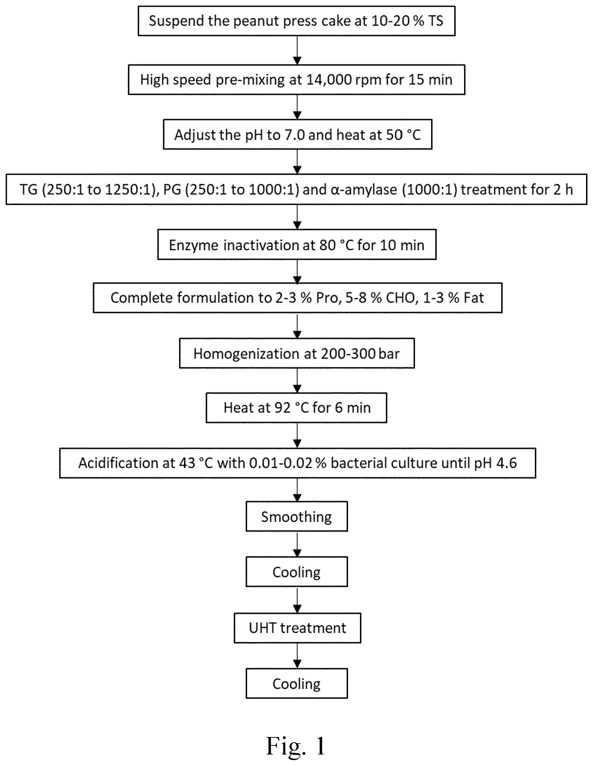

The diagram of this process as described above is illustrated by Figure 1.

### Example 2: Effects of the homogenization on the solubility of the PG treated peanut protein at pH 7,0.

In the absence of any treatment (homogenization or enzymatic treatment), the solubility of peanut protein in the press cake was 40%.

When the samples were treated with either PG alone (in the conditions given in example 1), or by the homogenization step alone, the solubility of the proteins increased to respectively 66% and 64%.

Finally, after the PG treatment, the samples that were further treated with homogenization were found to have the highest solubility (88%).

In these experiments, the homogenization step was carried out in two stages: a first stage at 200 bar at 70°C, a second stage at 50 bar at 70°C.

This means that the protein can be more liberated and solubilized by combining the two techniques.

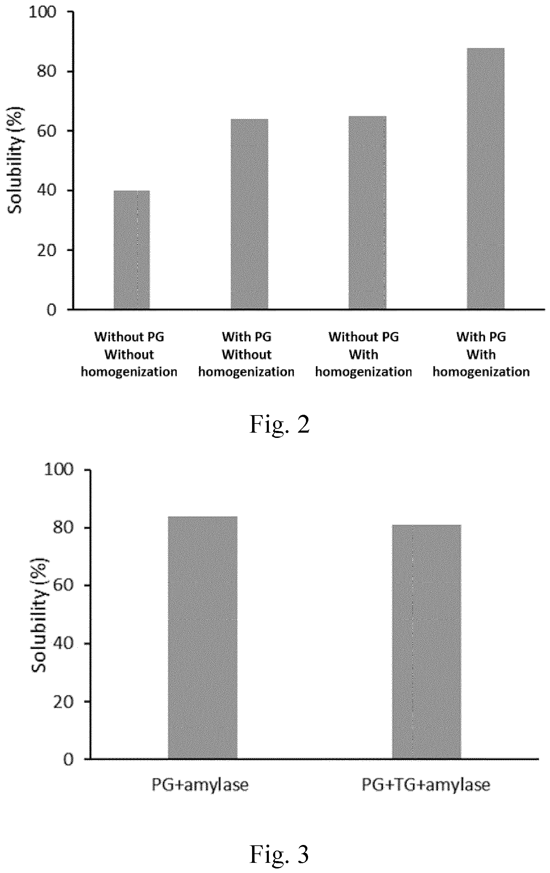

These results are reported in Figure 2. They show that the PG treatment and homogenization step enable to notably improve the solubilisation of the peanut proteins.

### Example 3: Solubility of peanut protein at pH 7,0 after enzymatic treatment with (i) PG with α-amylase and (ii) PG with α-amylase and transglutaminase (TG).

It was expected that TG decreases the solubility of the peanut proteins, since TG and PG compete on the same amino acids on the protein.

Therefore, the impact of the combination of PG with TG on peanut flour protein solubility was investigated. The solubility of the proteins was measured after a treatment with PG and α-amylase, or after a treatment with PG, α-amylase and TG.

The flour to PG ratio was 500:1, the flour to TG ratio was 1250:1 and the flour to α-amylase 1000:1.

The results of these experiments are reported in Figure 3.

They show that, unexpectedly, the solubility of the proteins was similar under both conditions.

These results demonstrate that the addition of TG does not decrease the solubility of peanuts proteins.

### Example 4: PSD results after treatment with PG alone, with PG and heat and with PG, heat and TG.

The PSD was measured on three peanut protein solutions obtained from peanut flour suspensions treated with PG alone; with PG and heat (110°C for 5 minutes); and with PG, TG and heat (110°C for 5 minutes).

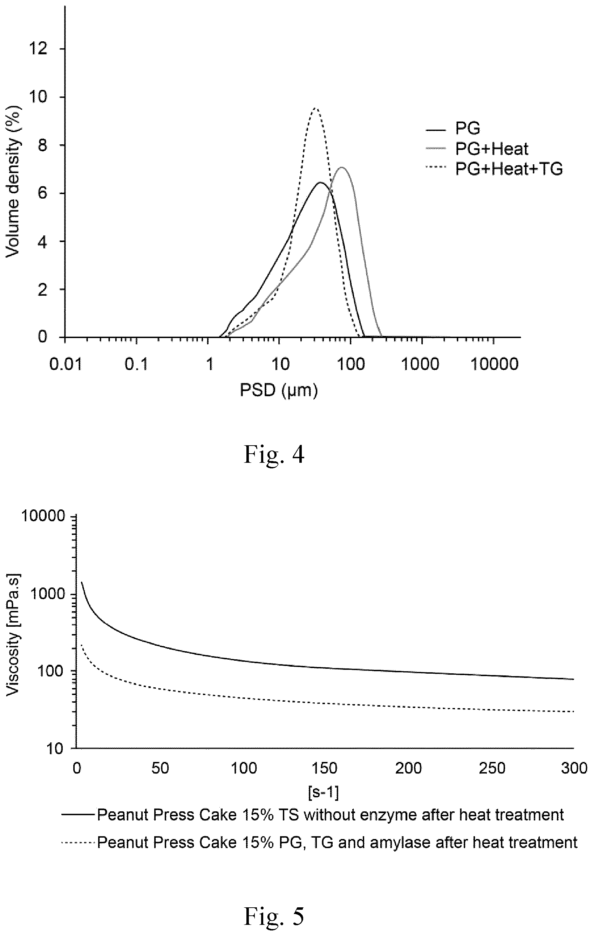

The results obtained are reported on Figure 4.

They show that the solution that undergoes an enzymatic treatment with PG alone has a PSD D90 of 74 µm (grey curve). When the solution went through a PG and heat treatment at 110°C for 5 minutes, the PSD D90 increased to 129 µm (black curve), and large aggregates were visible.

After the treatment with PG, TG and heat together (dotted curve), the solution had a PSD D90 of 60 µm and no aggregates formation were observed.

Moreover, no off-taste or odour were generated, and the sandiness of the sample was reduced.

### Example 5: Effects of the enzymatic treatment with PG, α-amylase and TG on the viscosity of peanut protein solutions.

A peanut press cake was suspended and mixed at 14,000 RPM. The suspension was divided into two parts. One part was treated, at pH 7,0, with a mixture of protein glutaminase (PG), α-amylase and transglutaminase (TG). The PG ratio to flour was 1000:1, TG ratio to flour was 1250:1 and the α-amylase ratio to flour was 1000:1. The second part was left untreated.

Both suspensions underwent a heat treatment at 120°C for 2 minutes.

The results of these experiments are reported in Figure 5.

They show that the viscosity of the enzymatically treated suspension was significantly lower in comparison to the non-enzymatically treated suspension.

Viscosity is due to the starch gelatinization and to the protein denaturation that occurs when proteins undergo a heat treatment.

These results demonstrate that the enzymatic treatment with PG, TG and α-amylase is effective in reducing the viscosity of the suspensions by preventing these phenomena.

### Example 6: Preparation of a fermented plant based product which is a protein-rich ambient drinkable yoghurt analogue containing a peanut protein containing liquid

A peanut press cake was collected from an oil-mill. It contained 52,5% proteins, 31.4 % carbohydrates and was free of fat. It was suspended in water in order to obtain 15% w/w total solids (TS). The suspension was pre-mixed at 14 000 RPM for 15 minutes. The pH was adjusted to 7,0 and the suspension was heated at 50°C.

The proteins in the suspension were digested using a mixture of enzymes containing α-amylase at a ratio to flour 1000:1, transglutaminase at a ratio to flour 1250:1 and protein glutaminase at a ratio to flour 500:1. The enzymatic digestion lasted for 2 hours. The enzymes were then inactivated by raising the temperature to 80°C for 10 minutes. The suspension was then diluted to 5% TS and mixed with other ingredients such as oil and sugar etc. and homogenized under a pressure of 300 bars.

The proportions of the ingredients are indicated in Table 1. The protein-rich ambient yoghurt analogue beverage suspension was obtained. Afterwards, the suspension was heat-treated at 92 °C for 6 minutes

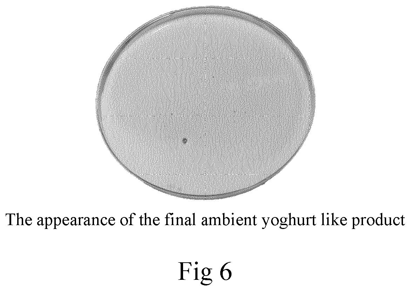

The suspension was subjected to fermentation with bacteria culture (0.01 %) at 43 °C until the pH was 4.6. Then the product went through the UHT heat treatment again. The appearance of the ambient drinkable yoghurt analogue is shown in Fig 6.

**Table 1 - Proportions of the ingredients used to prepare the protein-rich ambient yoghurt analogue beverage**

| Hydrolyzed peanut press cake (% w/w) | Sucrose (% w/w) | Vegetable oil and/or nut paste (% w/w) | Flavourings (% w/w) | Stabilizer | Total solids (% w/w) |
|---|---|---|---|---|---|
| 5 % | 6 | 3 | 0.15 % | 0.4 % | 14.55 |

### Example 7: Preparation of a protein-rich fermented plant based product in the form of a ambient drinkable yoghurt analogue containing a soy protein containing liquid

A soy press cake was collected from an oil-mill. It contained 51.8% proteins, 33.9 % carbohydrates and was free of fat. It was suspended in water in order to obtain 15% w/w total solids (TS). The suspension was pre-mixed at 14 000 RPM for 15 minutes. The pH was adjusted to 7,0 and the suspension was heated at 60°C.

The proteins in the suspension were digested using a mixture of enzymes containing cellulase at a ratio to flour 1000: 1, and protein glutaminase at a ratio to flour 1000: 1. The enzymatic digestion lasted for 2 hours. The enzymes were then inactivated by raising the temperature to 80°C for 10 minutes. The suspension was then diluted to 4.4 % TS and mixed with other ingredients (oil, sugar, etc) and homogenized under a pressure of 300 bars.

The proportions of the ingredients are indicated in Table 1. The protein-rich ambient yoghurt analogue beverage suspension was obtained. Afterwards, the suspension was heat-treated at 92 °C for 6 minutes

The suspension was subjected to fermentation with bacteria culture (0.01 %) at 43 °C until the pH was 4.6. Then the product went through the UHT heat treatment again.

**Table 2 - Proportions of the ingredients used to prepare the protein-rich ambient yoghurt analogue beverage**

| Hydrolyzed soy press cake (% w/w) | Sucrose (% w/w) | Vegetable oil (% w/w) | Stabilizer | Total solids (% w/w) |
|---|---|---|---|---|
| 4.4 % | 6 | 3 | 0.4 % | 13.8 |

## Claims

1. A process for preparing a protein containing fermented plant based product from a defatted oleaginous plant, **characterized in that** it comprises the following steps:
a) Forming a suspension comprising the defatted oleaginous plant in an aqueous solvent;
b) Enzymatically treating the suspension obtained in step a), with the following enzymes:
- at least one protein glutaminase for the solubilisation in said aqueous solvent of proteins contained in the defatted oleaginous plant,
- optionally one transglutaminase,
- at least one glycosidase,
said enzymes being used successively or simultaneously;
c) Homogenizing at a pressure higher than 30 bar to obtain a protein containing plant based product
d) Optionally recovering the protein containing plant based product obtained in step c);
e) Heating the plant based product to a temperature from 80°C to 140°C for 2 seconds to 10 min; and
f) Inoculating the plant based product with at least one starter culture to obtain an inoculated the plant based product and fermenting the plant based product until reaching a pH from 3.0 to 5.5, preferably 4.5 to 5.0 to obtain a protein containing fermented plant based product

2. A process for preparing a protein containing fermented plant based product according to claim 1, wherein the oleaginous plant is a seed or a fruit from at least one plant selected from the group consisting of peanut, soybean, rapeseed, sunflower, sesame, neem, cotton, palm, coconut, shea, castor bean, corn, nuts, almonds, hazelnuts, coconut, pistachios, walnut, cashew, seeds of grapes, or a combination thereof.

3. A process for preparing a protein containing fermented plant based product according to any one of claims 1 and 2, wherein the oleaginous plant according to the invention has been defatted so as to contain less than 25%, generally from 0.3 to 20 %, more generally from 0.5 to 15 %, still more generally from 1 to 10% of non-extracted oil on a weight % basis with respect to the total weight of the defatted oleaginous plant.

4. A process for preparing a protein containing fermented plant based product according to any one of claims 1 to 3, wherein the oleaginous plant has been crushed before step a) in order to extract its oil.

5. A process for preparing a protein containing fermented plant based product according to any one of claims 1 to 4, wherein the defatted oleaginous plant is under the form of a press cake, a flour or a meal.

6. A process for preparing a protein containing fermented plant based product according to any one of claims 1 to 5, wherein the defatted oleaginous plant is a peanut press cake or a soybean press cake.

7. A process for preparing a protein containing fermented plant based product according to any one of claims 1 to 6, wherein the defatted oleaginous plant/ protein glutaminase weight ratio is comprised between 50:1 to 2000:1, preferably between 250:1 to 1500:1 and more preferably from 500:1 to 1200:1.

8. A process for preparing a protein containing fermented plant based product according to any one of claims 1 to 6, wherein the enzymatic treatment of step b) is carried out in the presence of at least one glycosidase, preferably an α-amylase, a cellulase, a β-glucanase or a mixture of a cellulase with a β-glucanase.

9. A process for preparing a protein containing fermented plant based product according to any one of claims 1 to 8, wherein defatted oleaginous plant contains at least 20% by weight proteins, preferably from 25 to 60 % proteins, more preferably from 35% to 60% proteins on a weight % basis with respect to the total weight of the defatted oleaginous plant.

10. A process for preparing a protein containing fermented plant based product according to any one of claims 1 to 9, wherein the homogenisation is carried out at a pressure, between 100 and 400 bar, more preferably between 130 and 300 bar.

11. A process for preparing a protein containing fermented plant based product according to any one of claims 1 to 10, wherein, after step e), an additional heating is carried out at a temperature from 80°C to 140°C for 2 seconds to 10 minutes to obtain a shelf-stable protein containing fermented plant based product.

12. A process for preparing a protein containing fermented plant based product according to any one of claims 1 to 11, wherein, after step e), an additional homogenization is carried out at a pressure, between 100 and 400 bar, more preferably between 130 and 300 bar.

13. A process according to any one of claims 1 to 12, wherein the starter culture comprises at least one lactic acid-producing bacteria or the starter culture comprises least one lactic acid-producing bacteria and at least one yeast.

14. A fermented plant based product, **characterized in that** it is obtainable according to the process of any one of claims 1 to 13.

15. A fermented plant based product according to claim 14, **characterized in that** it comprises from 1 to 6 % protein, from 1 to 6 % fat and from 0.5 to 10% carbohydrate on a weight % basis, preferably the fat and protein consist of plant fat and plant protein.

16. A protein-rich food product, **characterized in that** it comprises a fermented plant based product according to any one of claims 14 or 15, and at least one food acceptable additive.

17. A protein-rich food product according to claim 16, **characterized in that** the food product is a ready-to-drink beverage, a spoonable or drinkable yoghurt, or a kefir analogue.

## Patentansprüche

1. Verfahren zum Herstellen eines proteinhaltigen, fermentierten, pflanzenbasierten Produkts aus einer entfetteten, ölhaltigen Pflanze, **dadurch gekennzeichnet, dass** es die folgenden Schritte umfasst:
a) Ausbilden einer Suspension, umfassend die entfettete, ölhaltige Pflanze in einem wässrigen Lösungsmittel;
b) Enzymatisches Behandeln der Suspension, die in Schritt a) erhalten wird, mit den folgenden Enzymen:
- mindestens einer Protein-Glutaminase für die Solubilisierung, in dem wässrigen Lösungsmittel, von Proteinen, die in der entfetteten, ölhaltigen Pflanze enthalten sind,
- optional einer Transglutaminase,
- mindestens einer Glykosidase,
wobei die Enzyme nacheinander oder gleichzeitig verwendet werden;
c) Homogenisieren bei einem Druck von über 30 Bar, um ein proteinhaltiges, pflanzenbasiertes Produkt zu erhalten
d) Optionales Gewinnen des proteinhaltigen, pflanzenbasierten Produkts, das in Schritt c) erhalten wird; e) Erhitzen des pflanzenbasierten Produkts auf eine Temperatur von 80 °C bis 140 °C 2 Sekunden bis 10 Minuten lang; und
f) Animpfen des pflanzenbasierten Produkts mit mindestens einer Starterkultur, um ein angeimpftes, pflanzenbasiertes Produkt zu erhalten, und Fermentieren des pflanzenbasierten Produkts bis zu einem Erreichen eines pH-Werts von 3,0 bis 5,5, vorzugsweise 4,5 bis 5,0, um ein proteinhaltiges, fermentiertes, pflanzenbasiertes Produkt zu erhalten

2. Verfahren zum Herstellen eines proteinhaltigen, fermentierten, pflanzenbasierten Produkts nach Anspruch 1, wobei die ölhaltige Pflanze ein Samen oder eine Frucht von mindestens einer Pflanze ist, ausgewählt aus der Gruppe, bestehend aus Erdnuss, Sojabohne, Raps, Sonnenblume, Sesam, Neem, Baumwolle, Palme, Kokosnuss, Shea, Rizinus, Mais, Nüssen, Mandeln, Haselnüssen, Kokosnuss, Pistazien, Walnuss, Cashew, Weintraubenkernen oder einer Kombination davon.

3. Verfahren zum Herstellen eines proteinhaltigen, fermentierten, pflanzenbasierten Produkts nach einem der Ansprüche 1 und 2, wobei die ölhaltige Pflanze gemäß der Erfindung entfettet wurde, um weniger als 25 %, allgemein von 0,3 bis 20 %, allgemeiner von 0,5 bis 15 %, noch allgemeiner von 1 bis 10 % nicht extrahiertes Öl auf einer Gew.-%-Basis in Bezug auf das Gesamtgewicht der entfetteten, ölhaltigen Pflanze zu enthalten.

4. Verfahren zum Herstellen eines proteinhaltigen, fermentierten, pflanzenbasierten Produkts nach einem der Ansprüche 1 bis 3, wobei die ölhaltige Pflanze vor Schritt a) zerkleinert wurde, um ihr Öl zu extrahieren.

5. Verfahren zum Herstellen eines proteinhaltigen, fermentierten, pflanzenbasierten Produkts nach einem der Ansprüche 1 bis 4, wobei die entfettete, ölhaltige Pflanze in der Form eines Presskuchens, eines Mehls oder eines Schrotes vorliegt.

6. Verfahren zum Herstellen eines proteinhaltigen, fermentierten, pflanzenbasierten Produkts nach einem der Ansprüche 1 bis 5, wobei die entfettete, ölhaltige Pflanze ein Erdnusspresskuchen oder ein Sojabohnenpresskuchen ist.

7. Verfahren zum Herstellen eines proteinhaltigen, fermentierten, pflanzenbasierten Produkts nach einem der Ansprüche 1 bis 6, wobei das Gewichtsverhältnis von entfetteter, ölhaltiger Pflanze zu Protein-Glutaminase zwischen 50 : 1 und 2000 : 1, vorzugsweise zwischen 250 : 1 und 1500 : 1 und mehr bevorzugt zwischen 500 : 1 und 1200 : 1, liegt.

8. Verfahren zum Herstellen eines proteinhaltigen, fermentierten, pflanzenbasierten Produkts nach einem der Ansprüche 1 bis 6, wobei die enzymatische Behandlung in Schritt b) in der Gegenwart mindestens einer Glycosidase, vorzugsweise einer α-Amylase, einer Cellulase, einer β-Glucanase oder einer Mischung einer Cellulase mit einer β-Glucanase, ausgeführt wird.

9. Verfahren zum Herstellen eines proteinhaltigen, fermentierten, pflanzenbasierten Produkts nach einem der Ansprüche 1 bis 8, wobei die entfettete, ölhaltige Pflanze mindestens zu 20 Gew.-% Proteine, vorzugsweise zu 25 bis 60 Gew.-% Proteine, mehr bevorzugt zu 35 bis 60 Gew.-% Proteine auf einer Gew.-%-Basis in Bezug auf das Gesamtgewicht der entfetteten, ölhaltigen Pflanze enthält.

10. Verfahren zum Herstellen eines proteinhaltigen, fermentierten, pflanzenbasierten Produkts nach einem der Ansprüche 1 bis 9, wobei die Homogenisierung bei einem Druck zwischen 100 und 400 Bar, mehr bevorzugt zwischen 130 und 300 Bar, ausgeführt wird.

11. Verfahren zum Herstellen eines proteinhaltigen, fermentierten, pflanzenbasierten Produkts nach einem der Ansprüche 1 bis 10, wobei nach Schritt e) ein zusätzliches Erhitzen auf eine Temperatur von 80 °C bis 140 °C für 2 Sekunden bis 10 Minuten lang ausgeführt wird, um ein lagerstabiles, proteinhaltiges, fermentiertes, pflanzenbasiertes Produkt zu erhalten.

12. Verfahren zum Herstellen eines proteinhaltigen, fermentierten, pflanzenbasierten Produkts nach einem der Ansprüche 1 bis 11, wobei nach Schritt e) eine zusätzliche Homogenisierung bei einem Druck zwischen 100 und 400 Bar, mehr bevorzugt zwischen 130 und 300 Bar, ausgeführt wird.

13. Verfahren nach einem der Ansprüche 1 bis 12, wobei die Starterkultur mindestens ein Milchsäure-produzierendes Bakterium umfasst oder die Starterkultur mindestens ein Milchsäure-produzierendes Bakterium und mindestens eine Hefe umfasst.

14. Fermentiertes, pflanzenbasiertes Produkt,
**dadurch gekennzeichnet, dass** es gemäß dem Verfahren nach einem der Ansprüche 1 bis 13 erhältlich ist.

15. Fermentiertes, pflanzenbasiertes Produkt nach Anspruch 14,
**dadurch gekennzeichnet, dass** es von 1 bis 6 % Protein, von 1 bis 6 % Fett und von 0,5 bis 10 % Kohlenhydrate auf einer Gew.-%-Basis umfasst, wobei vorzugsweise das Fett und das Protein aus Pflanzenfett und Pflanzenprotein bestehen.

16. Proteinreiches Lebensmittelprodukt, **dadurch gekennzeichnet, dass** es ein fermentiertes, pflanzenbasiertes Produkt nach einem der Ansprüche 14 oder 15 und mindestens einen für Lebensmittel geeigneten Zusatzstoff umfasst.

17. Proteinreiches Lebensmittelprodukt nach Anspruch 16,
**dadurch gekennzeichnet, dass** das Lebensmittelprodukt ein trinkfertiges Getränk, ein löffelbarer oder trinkbarer Joghurt oder ein Kefir-Analog ist.

## Revendications

1. Procédé permettant de préparer un produit fermenté à base de plantes contenant des protéines à partir d'une plante oléagineuse dégraissée, **caractérisé en ce qu'il** comprend les étapes suivantes :
a) Formation d'une suspension comprenant la plante oléagineuse dégraissée dans un solvant aqueux ;
b) Traitement enzymatique de la suspension obtenue à l'étape a), avec les enzymes suivantes :
- au moins une protéine glutaminase pour la solubilisation dans ledit solvant aqueux de protéines contenues dans la plante oléagineuse dégraissée,
- facultativement une transglutaminase,
- au moins une glycosidase,
lesdites enzymes étant utilisées successivement ou simultanément ;
c) Homogénéisation à une pression supérieure à 30 bar pour obtenir un produit à base de plantes contenant des protéines
d) Récupération facultative du produit à base de plantes contenant des protéines obtenu à l'étape c) ;
e) Chauffage du produit à base de plantes à une température allant de 80 °C à 140 °C pendant 2 secondes à 10 minutes ; et
f) Inoculation du produit à base de plantes avec au moins une culture de départ pour obtenir un produit à base de plantes inoculé et fermentation du produit à base de plantes jusqu'à ce qu'il atteigne un pH allant de 3,0 à 5,5, de préférence de 4,5 à 5,0, pour obtenir un produit fermenté à base de plantes contenant des protéines

2. Procédé de préparation d'un produit fermenté à base de plantes contenant des protéines selon la revendication 1, dans lequel la plante oléagineuse est une graine ou un fruit provenant d'au moins une plante choisie dans le groupe constitué d'arachide, soja, colza, tournesol, sésame, neem, coton, palmier, noix de coco, karité, ricin, maïs, fruits à coque, amandes, noisettes, noix de coco, pistaches, noix, noix de cajou, pépins de raisin, ou une combinaison de ceux-ci.

3. Procédé permettant de préparer un produit fermenté à base de plantes contenant des protéines selon l'une quelconque des revendications 1 et 2, dans lequel la plante oléagineuse selon l'invention a été dégraissée de manière à contenir moins de 25 %, généralement de 0,3 à 20 %, plus généralement de 0,5 à 15 %, encore plus généralement de 1 à 10 % d'huile non extraite sur une base de % en poids par rapport au poids total de la plante oléagineuse dégraissée.

4. Procédé permettant de préparer un produit fermenté à base de plantes contenant des protéines selon l'une quelconque des revendications 1 à 3, dans lequel la plante oléagineuse a été broyée avant l'étape a) afin d'en extraire l'huile.

5. Procédé permettant de préparer un produit fermenté à base de plantes contenant des protéines selon l'une quelconque des revendications 1 à 4, dans lequel la plante oléagineuse dégraissée se présente sous la forme d'un gâteau de presse, d'une farine ou d'un tourteau.

6. Procédé permettant de préparer un produit fermenté à base de plantes contenant des protéines selon l'une quelconque des revendications 1 à 5, dans lequel la plante oléagineuse dégraissée est un gâteau de presse d'arachide ou un gâteau de presse de soja.

7. Procédé permettant de préparer un produit fermenté à base de plantes contenant des protéines selon l'une quelconque des revendications 1 à 6, dans lequel le rapport en poids plante oléagineuse dégraissée/glutaminase protéique est compris entre 50:1 et 2000:1, de préférence entre 250:1 et 1500:1 et plus préférablement entre 500:1 et 1200:1.

8. Procédé permettant de préparer un produit fermenté à base de plantes contenant des protéines selon l'une quelconque des revendications 1 à 6, dans lequel le traitement enzymatique de l'étape b) est effectué en présence d'au moins une glycosidase, de préférence une α-amylase, une cellulase, une β-glucanase ou un mélange d'une cellulase avec une β-glucanase.

9. Procédé permettant de préparer un produit fermenté à base de plantes contenant des protéines selon l'une quelconque des revendications 1 à 8, dans lequel la plante oléagineuse dégraissée contient au moins 20 % en poids de protéines, de préférence de 25 à 60 % de protéines, plus préférablement de 35 % à 60 % de protéines sur une base de % en poids par rapport au poids total de la plante oléagineuse dégraissée.

10. Procédé permettant de préparer un produit fermenté à base de plantes contenant des protéines selon l'une quelconque des revendications 1 à 9, dans lequel l'homogénéisation est effectuée à une pression comprise entre 100 et 400 bar, plus préférablement entre 130 et 300 bar.

11. Procédé permettant de préparer un produit fermenté à base de plantes contenant des protéines selon l'une quelconque des revendications 1 à 10, dans lequel, après l'étape e), un chauffage supplémentaire est effectué à une température allant de 80 °C à 140 °C pendant 2 secondes à 10 minutes pour obtenir un produit fermenté à base de plantes contenant des protéines de longue conservation.

12. Procédé permettant de préparer un produit fermenté à base de plantes contenant des protéines selon l'une quelconque des revendications 1 à 11, dans lequel, après l'étape e), une homogénéisation supplémentaire est effectuée à une pression comprise entre 100 et 400 bar, plus préférablement entre 130 et 300 bar.

13. Procédé selon l'une quelconque des revendications 1 à 12, dans lequel la culture de départ comprend au moins une bactérie productrice d'acide lactique ou la culture de départ comprend au moins une bactérie productrice d'acide lactique et au moins une levure.

14. Produit fermenté à base de plantes, **caractérisé en ce qu'il** peut être obtenu selon le procédé de l'une quelconque des revendications 1 à 13.

15. Produit fermenté à base de plantes selon la revendication 14, **caractérisé en ce qu'il** comprend de 1 à 6 % de protéines, de 1 à 6 % de matières grasses et de 0,5 à 10 % de glucides sur une base de % en poids, de préférence les matières grasses et les protéines sont constituées de matières grasses et de protéines végétales.

16. Produit alimentaire riche en protéines, **caractérisé en ce qu'il** comprend un produit fermenté à base de plantes selon l'une quelconque des revendications 14 ou 15, et au moins un additif alimentaire acceptable.

17. Produit alimentaire riche en protéines selon la revendication 16, **caractérisé en ce que** le produit alimentaire est une boisson prête à boire, un yaourt mangeable à la cuillère ou à boire, ou un analogue de kéfir.
